# EUROPEAN PATENT SPECIFICATION

(11) **EP 0 588 907 B1**
(45) Date of publication and mention of the grant of the patent: **01.03.1995**
(21) Application number: 92912772.8
(22) Date of filing: 29.05.1992
(51) Int. Cl.: B65D 77/22, F16K 17/04

(54) **RELIEF VALVE**
Überdruckventil
SOUPAPE DE SURETE

(30) Priority: 18.06.1991 IT BO910213
(43) Date of publication of application: 30.03.1994
(73) Proprietor: ICA S.p.A., I-40127 Bologna (IT)
(72) Inventor: RAPPARINI, Gino, I-40139 Bologna (IT)
(74) Representative: Beszédes, Stephan G., Dr.
(86) International application number: PCT/IT92/00060
(87) International publication number: WO 92/22473

(56) References cited:
- FR-A- 2 338 865
- GB-A- 2 099 958
- US-A- 4 271 241

## Description

### FIELD OF TECHNOLOGY

This invention refers to a relief valve.

### PRIOR ART

Different solutions relating to relief valves are known from:
DE-A- 3147321, on which the preamble of claim 1 is based, DE-A- 3125496, DE-C-1195830 and FR-A- 2338865.

The solutions described in these patents do not completely face physical and functional problems of the relief valve; they just make a compromise as they do not solve all the following problems:
- too high thickness causing deformations on the packaged product;
- too high diameters causing difficulties when handling flexible material where the valve has been applied;
- during thermo-welding, the application of the valve may come up against further difficulties if not carried out with sufficiently soft material;
- the insertion of valves into an already punched bores may present centering difficulties;
Other problems concern the external appearance, tampering and stacking difficulties of packages; others refer to external valves or to internally-applied valves which protrude because of their shape and can all jeopardise the good operation of the valve, thus endangering the quality of packaged product.

The technical solution for the problem to be solved is defined in the characterising portion of claim 1.

This new valve does not require the previous punching of the insertion bore on the flexible belt and it eliminates the related centering operations.

Indeed the valve is directly placed on the non-punched belt and during its application it acts as a counter-plate for the simultaneous relief bore.

### DESCRIPTION

Figure 1 represents schematically the valve applied inside a container in relief position.

Figure 2 represents the same valve in seal position against air penetration from outside.

Figure 3 illustrates the valve in details as follow:
- 1: covering disk
- 2: seal membrane
- 3: disk slanted edge
- 4: disk groove
- 5: valve body
- 6: axial thickness of relief valve
- 7: upper surface of covering disk
- 8: upper surface of valve body
- 9: flexible container
- 10: disk central bore
- 11: disk ribs
- 12: membrane seal seat
- 13: valve body bores
- 14: seal viscous layer
- 15: relief bore drilled in the container

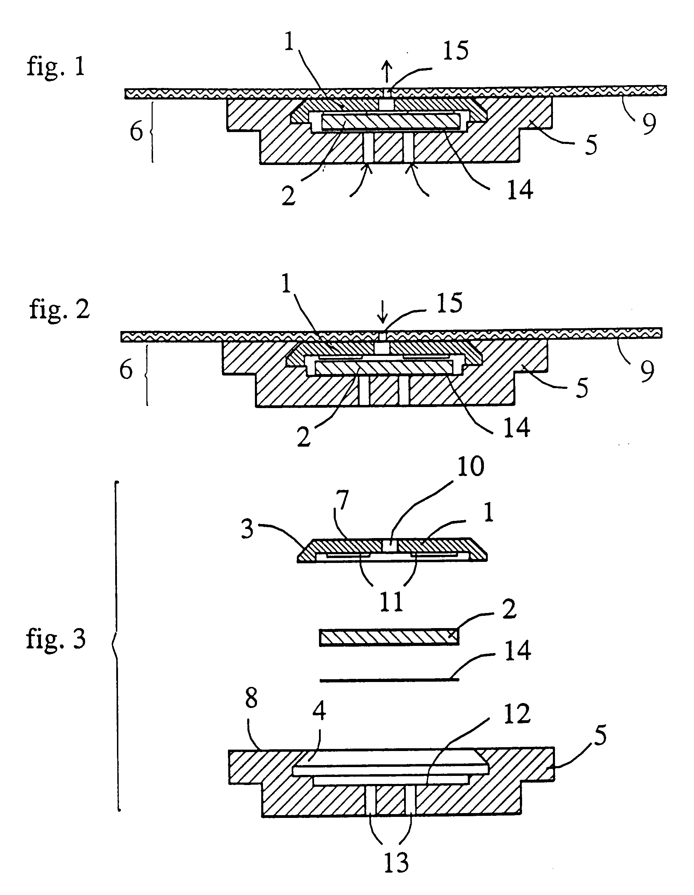

Figure 1 shows that lifting the membrane (2) from the seal seat (12), and the presence of ribs (11) of the disk (1) are responsible for the relief action. Under particular conditions of inner over-pressure, gases to be eliminated pass through bores (13), lift the membrane (2), flow through ribs (11) and go outside through bores(10 and 15).

Figure 2 shows that the adhesion of the membrane (2) to the seat (12) of the valve body (5) is responsible for the seal action. This action is optimised by the presence of the viscous layer (14) which ensures the hermetic seal of the container after relieving.

## Claims

1. A relief valve consisting of a valve body (5) with venting holes (13) and a peripheral groove (4), a circular disk (1) with a venting hole (10) and with a slanted edge (3) fitted into the peripheral groove (4), a membrane (2) resting on the seal seat (12) of the valve body (5), and of a viscous layer (14) provided between the membrane (2) and the seal seat (12), said relief valve being thermosealed to the inside wall of a flexible container (9) which is provided with a venting hole (15), CHARACTERIZED IN THAT the axial overall dimension (6) coincides with the thickness of the valve body (5), the upper flat surface (7) of the covering disk (1) being coplanar with the upper flat surface (8) of the valve body (5) such that said relief valve presents a flat facing surface towards the internal wall of said flexible container (9).

2. A relief valve according to the previous claim, CHARACTERIZED IN THAT the covering disk (1) presents a central venting hole (10) acting as a counter plate for punching the corresponding relief hole (15) into the flexible container (9).

3. A relief valve according to the previous claims, CHARACTERIZED IN THAT protruding ribs (11) in the surface of the circular disk (1) opposite to membrane (2) provide flow channels which comunicate with said venting and relief holes (10 and 15).

## Patentansprüche

1. Überdruckventil, bestehend aus einem Ventilkörper (5) mit Entlüftungslöchern (13) und einer Außenrille (4), einer kreisförmigen Scheibe (1) mit einem Entlüftungsloch (10) und mit einer abgeschrägten, in die Außenrille (4) eingepaßten Kante (3), einer auf der Verschlußauflage (12) des Ventilkörpers (5) sitzenden Membran (2) und einer viskosen Schicht (14) zwischen der Membran (2) und der Verschlußauflage (12), wobei das Überdruckventil mit der Innenwand eines flexiblen Containers (9) thermoversiegelt ist, welcher mit einem Entlüftungsloch (15) versehen ist, **dadurch gekennzeichnet**, daß die axiale Gesamtausdehnung (6) sich mit der Dicke des Ventilkörpers (5) deckt, wobei die obere flache Außenfläche (7) der Deckscheibe (1) mit der oberen flachen Außenfläche (8) des Ventilkörpers (5) koplanar ist, so daß das Überdruckventil eine der Innenwand des flexiblen Containers (9) gegenüberstehende flache Stirnfläche darstellt.

2. Überdruckventil nach dem vorhergehenden Anspruch, **dadurch gekennzeichnet**, daß die Deckscheibe (1) ein zentrales Entlüftungsloch (10) aufweist, welche als Gegenplatte für das Stanzen des entsprechenden Entlüftungsloches (15) in den flexiblen Container (9) wirkt.

3. Überdruckventil nach den vorhergehenden Ansprüchen, **dadurch gekennzeichnet**, daß vorstehende Rippen (11) in der Oberfläche der kreisförmigen, der Membran (2) gegenüberliegenden Scheibe (1) Fließkanäle bereitstellen, die mit den Entlastungs- und Überdrucklöchern (10 und 15) in Verbindung stehen.

## Revendications

1. Une valve de décharge consistant en un corps de valve (5) muni de trous de décharge (13) et d'une rainure périphérique (4), d'un disque circulaire (1) muni d'un trou de décharge ou d'évacuation (10) et d'un bord chanfreiné (3) logé dans la rainure périphérique (4), une membrane (2) reposant sur le siège d'étanchéité (12) du corps de valve (5) et une couche visqueuse (14) étant prévue entre la membrane (2) et le siège d'étanchéité (12), ladite valve de décharge étant scellée thermiquement à la paroi intérieure d'un récipient flexible (9) qui est muni d'un trou de décharge, caractérisée en ce que la dimension axiale générale (6) coïncide avec l'épaisseur du corps de valve (5), la surface supérieure plane (7) du disque de couverture (1) étant coplanaire à la surface supérieure plane (8) du corps de valve (5), de telle façon que ladite valve de décharge présente une surface de face plane vers la paroi intérieure dudit récipient flexible (9).

2. Une valve de décharge selon la revendication précédente, caractérisée en ce que le disque de couverture (1) comporte un trou de ventilation central (10) remplissant la fonction de contre-plaque pour découper ou réaliser le trou de décharge correspondant (15) dans le récipient flexible (9).

3. Une valve de décharge selon les revendications précédentes, caractérisée en ce que des nervures en saillie (11) sur la surface du disque circulaire (1) opposé à la membrane (2) constituent des canaux d'écoulement qui communiquent avec lesdits trous d'évacuation et de décharge (10 et 15).
